# FASCICULE DE BREVET EUROPEEN

(11) **EP 4 594 610 B1**
(45) Date de publication et mention de la délivrance du brevet: **25.11.2026**
(21) Numéro de dépôt: 23793915.2
(22) Date de dépôt: 29.09.2023
(51) Int. Cl.: F02K 1/72, F02K 1/76

(54) **INVERSEUR DE POUSSEE COMPRENANT UN SYSTEME AMELIORE DE DEPLACEMENT DE LA STRUCTURE MOBILE VERS SA POSITION RECULEE D'INVERSION DE POUSSEE**
SCHUBUMKEHRVORRICHTUNG MIT EINEM VERBESSERTEN SYSTEM ZUM BEWEGEN DER BEWEGLICHEN STRUKTUR IN DIE EINGEZOGENE SCHUBUMKEHRPOSITION DAVON
THRUST REVERSER COMPRISING AN IMPROVED SYSTEM FOR MOVING THE MOVABLE STRUCTURE TOWARDS THE RETRACTED THRUST REVERSAL POSITION THEREOF

(30) Priorité: 29.09.2022 FR 2209927
(43) Date de publication de la demande: 06.08.2025
(73) Titulaire: Safran Nacelles, 76700 Gonfreville-l'Orcher (FR)
(72) Inventeur: MARIE, Nicolas Pierre Denis, 77550 MOISSY-CRAMAYEL (FR); VALLEROY, Laurent Georges, 77550 MOISSY-CRAMAYEL (FR); PEYRON, Vincent Jean-François, 77550 MOISSY-CRAMAYEL (FR); CARUEL, Pierre Charles, 77550 MOISSY-CRAMAYEL (FR)
(74) Mandataire: Santarelli
(86) Numéro de dépôt international: PCT/FR2023/051505
(87) Numéro de publication internationale: WO 2024/069109

(56) Documents cités:
- EP-A2- 3 165 752
- FR-A1- 2 815 672
- FR-A1- 2 966 882
- FR-A1- 3 076 864
- US-A- 4 592 508

## Description

### Domaine technique

L'invention se rapporte au domaine des nacelles et des inverseurs de poussée pour ensemble propulsif d'aéronef, et, plus particulièrement, aux systèmes permettant le déplacement vers l'arrière de la structure mobile de tels inverseurs.

### État de la technique antérieure

Les inverseurs de poussée sont des dispositifs permettant de dévier vers l'avant le flux d'air traversant l'ensemble propulsif, de manière à raccourcir les distances d'atterrissage, et à limiter la sollicitation des freins sur les atterrisseurs. Un tel inverseur est par exemple connu du document EP 3 165 752 A2.

Les inverseurs à grilles actuellement exploités dans le secteur aéronautique comprennent généralement des grilles de déviation intégrées à une structure fixe de l'inverseur, destinée à être reliée à un carter de turbomachine. Une structure mobile de l'inverseur comporte un ou plusieurs capots mobiles d'inverseur, et elle est montée déplaçable en translation par rapport à la structure fixe entre une position avancée de poussée directe, et une position reculée d'inversion de poussée. En position avancée de poussée directe, les grilles de déviation sont agencées dans une cavité des capots mobiles d'inverseur, et elles sont isolées de la veine secondaire de l'ensemble propulsif par une paroi radialement interne des capots d'inverseur. En revanche, dans la position reculée d'inversion de poussée, la paroi radialement interne reculée des capots d'inverseur définit une ouverture de passage de la veine secondaire vers les grilles de déviation.

Pour dévier au moins une partie du flux secondaire vers cette ouverture de passage en direction des grilles, l'inverseur est également équipé de volets d'obturation, qui, lorsqu'ils sont déployés, obturent au moins partiellement la veine secondaire. De manière connue, cela force l'air du flux secondaire à traverser l'ouverture de passage et à rejoindre les grilles, qui génèrent alors le flux d'air de contre-poussée vers l'avant.

Il existe également des solutions d'obturation de la veine secondaire à l'aide de membranes déployables. Une telle conception à membranes est par exemple connue du document FR 3 076 864 A1.

De manière classique, le déplacement de la structure mobile de l'inverseur, vers l'arrière en direction de sa position reculée d'inversion de poussée, s'effectue à l'aide d'actionneurs du type vérins hydrauliques ou vis à billes actionnées par un moteur électrique, par l'intermédiaire d'un arbre flexible. Cette solution conventionnelle donne satisfaction, mais la présence des actionneurs ainsi que les moyens permettant leur fixation au sein de l'inverseur pénalisent la masse globale de celui-ci.

Pour répondre à cette problématique, il a été proposé d'utiliser de l'air pressurisé de la veine secondaire pour générer une pression sur des volets d'obturation écopants, afin de provoquer le déplacement de la structure mobile vers l'arrière. Cependant, cette solution s'avère complexe à mettre en œuvre, et nécessite une cinématique particulière pour les volets d'obturation afin de les rendre écopants, cette cinématique n'étant pas forcément désirée par le concepteur de l'inverseur. De plus, avec ce type de conception, une étanchéité à l'air peut être requise au niveau des extrémités amont et aval du volet d'obturation, en position rabattue du volet. Cette étanchéité peut s'avérer compliquée à réaliser, en particulier entre l'extrémité aval du volet et la paroi radialement interne du capot d'inverseur sur laquelle cette extrémité aval de volet est montée articulée.

### Exposé de l'invention

Pour répondre au moins partiellement aux inconvénients mentionnés ci-dessus et relatifs aux réalisations antérieures, l'invention a tout d'abord pour objet un inverseur de poussée pour ensemble propulsif d'aéronef, l'inverseur comprenant une structure fixe équipée d'une paroi de délimitation radialement interne d'une veine secondaire de l'ensemble propulsif destinée à être traversée par un flux secondaire, l'inverseur comprenant également une structure mobile comprenant au moins un capot mobile d'inverseur présentant une cavité, de préférence ouverte vers l'avant, et délimitée entre une paroi radialement externe et une paroi radialement interne du capot mobile d'inverseur, la paroi radialement interne formant une paroi de délimitation radialement externe de la veine secondaire, la structure mobile étant déplaçable en translation par rapport à la structure fixe selon un axe central longitudinal de l'inverseur, entre une position avancée de poussée directe et une position reculée d'inversion de poussée. Selon l'invention, l'inverseur comprend également un système commandé de déplacement du capot mobile vers la position reculée d'inversion de poussée, par injection d'air du flux secondaire à travers la paroi radialement interne du capot mobile d'inverseur, dans ladite cavité.

L'invention prévoit ainsi un système commandé de déplacement de la structure mobile basé sur une conception simple, fiable, facile à implanter, et de faible masse. En effet, la commande permettant à de l'air du flux secondaire de pénétrer dans la cavité du capot mobile peut être particulièrement simple à réaliser, par exemple sous la forme d'une pièce d'obturation associée à un simple verrou commandé, comme cela sera détaillé ultérieurement. L'air du flux secondaire peut ainsi facilement pénétrer dans la cavité en passant à travers la paroi radialement interne de capot mobile, sous une pression élevée engendrant le déplacement vers l'arrière du capot mobile d'inverseur.

Le système commandé de déplacement permet en premier lieu de générer une impulsion lors du début de la course d'ouverture de la structure mobile, vers sa position reculée d'inversion de poussée. Il peut aussi permettre de contribuer au moins en partie à déplacer la structure mobile lors de la suite de cette course d'ouverture. Il est noté que lors de la suite de cette course d'ouverture, d'autres facteurs et/ou moyens permettent d'assurer le déplacement vers l'arrière, comme la trainée de l'air sur la surface extérieure aérodynamique du capot mobile, la dépression à l'arrière de celui-ci, l'introduction de l'air pressurisé issu de la veine secondaire directement dans la cavité par l'ouverture engendrée par le recul du capot, ou encore lorsque l'air externe s'engouffre par écopage dans l'ouverture engendrée à l'avant du capot mobile, ou encore l'éventuelle présence d'un actionneur qui serait alors de dimensionnement inférieur à ceux rencontrés habituellement. Néanmoins, l'invention est préférentiellement mise en œuvre sans actionneur pour la course d'ouverture en vol, un actionneur plus faiblement dimensionné pouvant néanmoins être conservé pour des opérations de test et/ou pour autoriser des opérations de maintenance au sol avec la structure mobile en position reculée. En outre, un actionneur peut être prévu pour assurer la course de fermeture de la structure mobile de l'inverseur, correspondant à son déplacement de la position reculée d'inversion de poussée, vers la position avancée de poussée directe.

En outre, l'invention ne nécessite pas la mise en œuvre de volets d'obturation de type écopants, mais à l'inverse, la conception des moyens d'obturation de la veine secondaire reste avantageusement libre. Néanmoins, des volets d'obturation de type écopants peuvent être retenus, sans sortir du cadre de l'invention.

Pour engendrer le déplacement vers l'arrière du capot mobile, l'air du flux secondaire traverse la paroi radialement interne de ce capot, par exemple via un ou plusieurs passages d'air à travers la paroi. En jet direct, l'étanchéité à l'air s'avère aisée à mettre en œuvre au niveau de ces passages d'air traversants, évitant ainsi l'introduction d'air non désirée dans la cavité du capot mobile.

L'invention prévoit de préférence au moins l'une quelconque des caractéristiques techniques optionnelles suivantes, prises isolément ou en combinaison.

De préférence, le système commandé de déplacement comporte :
- un passage d'air à travers la paroi radialement interne du capot mobile ;
- une pièce d'obturation équipant le capot mobile, la pièce comportant une portion d'obturation du passage d'air ;
- un dispositif de commande, comme en simple verrou commandé, permettant de maintenir la pièce d'obturation en position d'obturation du passage d'air, et de libérer cette pièce d'obturation de manière à permettre l'injection d'air du flux secondaire à travers la paroi radialement interne du capot mobile d'inverseur, dans ladite cavité.

De préférence, la pièce d'obturation est montée mobile sur la paroi radialement interne, en étant agencée radialement vers l'intérieur par rapport à cette dernière, entre la position d'obturation du passage d'air dans laquelle la pièce d'obturation est rabattue contre la paroi radialement interne, et une position en saillie radialement vers l'intérieur dans la veine secondaire, dans laquelle elle libère le passage d'air et dans laquelle elle forme, préférentiellement avec son extrémité axiale amont et conjointement avec la paroi radialement interne, une ouverture d'introduction d'air du flux secondaire ouverte axialement vers l'amont.

Alternativement, la pièce d'obturation est montée mobile sur la paroi radialement interne, en étant agencée radialement vers l'extérieur par rapport à cette dernière, donc dans ladite cavité, entre la position d'obturation du passage d'air dans laquelle la pièce d'obturation est rabattue contre la paroi radialement interne, et une position en saillie radialement vers l'extérieur, dans laquelle elle libère le passage d'air.

De préférence, la portion d'obturation du passage d'air est centrée au sein de la pièce d'obturation.

De préférence, dans la position reculée d'inversion de poussée de la structure mobile, la structure fixe de l'inverseur et une extrémité amont de la paroi radialement interne reculée du capot mobile d'inverseur laissent apparaître entre elles une ouverture de passage d'air à travers la veine secondaire, l'inverseur de poussée comprenant également des moyens d'obturation de la veine secondaire, conçus pour dévier au moins une partie du flux secondaire vers l'ouverture de passage.

De préférence, la pièce d'obturation est un volet d'obturation de la veine secondaire, appartenant auxdits moyens d'obturation, ou la pièce d'obturation est une pièce intervolets de reconstitution de la veine secondaire, agencée circonférentiellement entre deux volets d'obturation desdits moyens d'obturation.

De préférence, l'inverseur comprend un ou plusieurs passages d'air à travers la paroi radialement interne, leur nombre étant compris entre un et six, répartis circonférentiellement autour de l'axe central longitudinal, de manière régulière ou irrégulière.

De préférence, la structure fixe de l'inverseur comporte au moins une grille de déviation agencée, en position avancée de poussée directe de la structure mobile, dans la cavité du capot mobile, en étant isolée de la veine secondaire par la paroi radialement interne du capot d'inverseur. Alternativement, la/les grilles de déviation pourraient être intégrées à la structure mobile de l'inverseur, sans sortir du cadre de l'invention.

De préférence, l'inverseur comporte également un dispositif d'amortissement de fin de course d'ouverture du capot mobile, dans son déplacement allant de la position avancée de poussée directe vers la position reculée d'inversion de poussée. Ces moyens d'amortissement peuvent être incorporés à des vérins complémentaires d'ouverture ou de fermeture du capot mobile.

De préférence, l'inverseur comporte des moyens de reprise des efforts de contre-poussée entre la structure mobile et la structure fixe, générés sur les moyens d'obturation de la veine et la structure mobile. Ces moyens peuvent être communalisés avec le dispositif d'amortissement et/ou les vérins d'ouvertures et de fermetures complémentaires, ou peuvent être des moyens séparés comme des butées au niveau des rails de glissement ou des bielles télescopiques dédiées.

L'invention a également pour objet un ensemble propulsif pour aéronef, comprenant une turbomachine et une nacelle comportant au moins un capot de soufflante, ainsi qu'un inverseur de poussée tel que décrit ci-dessus.

L'invention a également pour objet un procédé de commande d'un tel inverseur de poussée. Pour entraîner le déplacement de la structure mobile de sa position avancée de poussée directe vers sa position reculée d'inversion de poussée, le procédé comprend une étape de commande du système de déplacement, de manière à ce que de l'air du flux secondaire soit injecté à travers la paroi radialement interne, dans ladite cavité du capot mobile, afin de provoquer son déplacement vers la position reculée d'inversion de poussée.

D'autres avantages et caractéristiques de l'invention apparaîtront dans la description détaillée non limitative ci-dessous.

### Brève description des dessins

La description détaillée qui suit fait référence aux dessins annexés sur lesquels :
[Fig. 1] est une demi-vue schématique en coupe longitudinale d'un ensemble propulsif, comprenant un inverseur de poussée selon un mode de réalisation préféré de l'invention, représenté en configuration de poussée directe ;
[Fig. 2] est une demi-vue schématique en coupe longitudinale de l'inverseur équipant l'ensemble propulsif montré sur la figure 1, avec l'inverseur représenté en configuration de poussée directe ;
[Fig. 3] est une demi-vue schématique de l'inverseur montré sur la figure 2, avec l'inverseur représenté dans une configuration intermédiaire entre la configuration de poussée directe, et la configuration d'inversion de poussée ;
[Fig. 3A] est une demi-vue schématique similaire à celle de la figure précédente, avec l'inverseur représenté dans la configuration d'inversion de poussée ;
[Fig. 4] est une vue en perspective de l'inverseur montré sur les figures 2 à 3A, représenté en configuration de poussée directe ;
[Fig. 4A] est une vue schématique montrant l'alternance, selon la direction circonférentielle de l'inverseur, entre les volets d'obturation de la veine secondaire et les pièces intervolets ;
[Fig. 5] est une vue en perspective de l'inverseur montré sur la figure 4, représenté en configuration d'inversion de poussée ;
[Fig. 6] est une demi-vue schématique en coupe longitudinale similaire à celle de la figure 2, dans un autre plan de coupe, montrant le système commandé de déplacement de capot mobile de manière plus détaillée, et se présentant sous la forme d'un mode de réalisation préféré de l'invention ;
[Fig. 7] est une demi-vue schématique en coupe longitudinale similaire à celle de la figure 6, avec l'inverseur toujours représenté en configuration de poussée directe, mais juste avant le début de la course d'ouverture des capots mobiles d'inverseur ;
[Fig. 8] est une demi-vue schématique en coupe longitudinale similaire à celle de la figure 6, avec l'inverseur représenté en configuration intermédiaire entre la configuration de poussée directe, et la configuration d'inversion de poussée ; et
[Fig. 9] est une demi-vue schématique en coupe longitudinale similaire à celle de la figure 8, avec l'inverseur se présentant sous la forme d'une alternative.

### Description des modes de réalisation

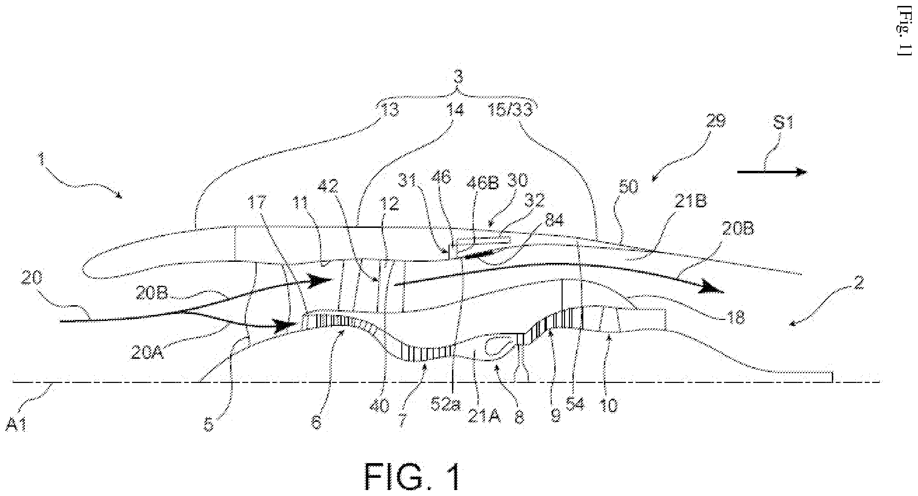

Il est représenté sur la figure 1 un ensemble propulsif 1 d'aéronef, présentant un axe central longitudinal A1.

Par la suite, les termes « amont » et « aval » sont définis relativement à un sens général S1 d'écoulement des gaz à travers l'ensemble propulsif 1, le long de l'axe A1 lorsque celui-ci génère une poussée. Ces termes « amont » et « aval » pourraient respectivement être substitués par les termes « avant » et « arrière », avec la même signification.

L'ensemble propulsif 1 comprend une turbomachine 2, une nacelle 3 ainsi qu'un mât (non représenté), destiné à relier l'ensemble propulsif 1 à une aile (non représentée) de l'aéronef.

La turbomachine 2 est dans cet exemple un turboréacteur à double flux et à double corps comprenant, de l'avant vers l'arrière, une soufflante 5, un compresseur basse pression 6, un compresseur haute pression 7, une chambre de combustion 8, une turbine haute pression 9 et une turbine basse pression 10. Les compresseurs 6 et 7, la chambre de combustion 8 et les turbines 9 et 10 forment un générateur de gaz. Le turboréacteur 2 est doté d'un carter de soufflante 11 relié au générateur de gaz par des bras structuraux 12.

La nacelle 3 comprend une section avant formant une entrée d'air 13, une section médiane qui comporte deux capots de soufflante 14 enveloppant le carter de soufflante 11, et une section arrière 15.

En fonctionnement, un écoulement d'air 20 pénètre dans l'ensemble propulsif 1 par l'entrée d'air 13, traverse la soufflante 5 puis se divise en un flux primaire 20A et un flux secondaire 20B. Le flux primaire 20A s'écoule dans une veine primaire 21A de circulation de gaz traversant le générateur de gaz. Le flux secondaire 20B s'écoule dans une veine secondaire 21B entourant le générateur de gaz. La veine secondaire 21B est délimitée radialement vers l'intérieur par un carénage interne fixe qui enveloppe le générateur de gaz. Dans cet exemple, le carénage interne fixe comprend un premier tronçon 17 appartenant à la section médiane 14, et un deuxième tronçon 18 s'étendant vers l'arrière à partir du premier tronçon 17, de manière à former une partie de la section arrière 15. Ce second tronçon 18 fait partie intégrante d'une structure fixe d'un inverseur de poussée qui sera décrit ci-après. Ce même tronçon sera par la suite dénommé paroi 18 de délimitation radialement interne de la veine secondaire 21B (et de manière conventionnelle, il est également dénommée IFS, de l'anglais « Inner Fixed Structure »).

Radialement vers l'extérieur, la veine secondaire 21B est délimitée par le carter de soufflante 11, et, dans la configuration de la figure 1, par un ou plusieurs capots mobiles d'inverseur 33 formant une partie de la section arrière 15 de la nacelle 3, et qui seront décrits ultérieurement. Plus précisément, entre le carter de soufflante 11 et les capots d'inverseur 33, il est prévu une virole extérieure 40 d'un carter intermédiaire 42, ce dernier comprenant les bras structuraux 12 précités, dont l'extrémité radialement externe est fixée sur cette virole 40. Celle-ci participe donc également à délimiter la veine secondaire 21B radialement vers l'extérieur, en étant située dans le prolongement axial aval du carter de soufflante 11.

La nacelle 3 comporte donc un inverseur de poussée 30 centré sur l'axe A1 et comprenant d'une part une structure fixe 31 solidaire du carter de soufflante 11, et d'autre part une structure 29 mobile par rapport à la structure fixe 31. La structure fixe 31 comporte par exemple un cadre avant 46 qui la raccorde fixement au carter de soufflante 11, de préférence via un assemblage en bride couteau situé en aval de la virole extérieure 11. Ce cadre avant 46 contient une partie aérodynamique profilée appelée bord de déviation 46B, qui guide l'écoulement en jet inversé.

Ici, la structure fixe 31 comporte aussi une pluralité de grilles de déviation 32 agencées de manière adjacente les unes aux autres autour de l'axe A1, selon une direction circonférentielle de l'inverseur 30 et de l'ensemble propulsif 1. Par ailleurs, la structure mobile 29 comprend quant à elle les capots mobiles d'inverseur 33 précités, par exemple deux capots 33 s'étendant chacun sur une amplitude angulaire d'environ 180°. Cette configuration à deux capots 33 est particulièrement bien adaptée dans le cas d'une conception de nacelle dans laquelle les capots/parois 18 sont également montés articulés, l'inverseur 30 présentant alors une architecture dite « en D », connue sous l'appellation anglo-saxonne « D-Duct ». Dans cette architecture, les capots 18, 33 sont reliés de manière à s'ouvrir / se fermer simultanément lors des opérations de maintenance sur le moteur. Néanmoins, d'autres architectures sont possibles, comme par exemple une architecture dite « en C », connue sous l'appellation anglo-saxonne « C-Duct », ou encore une architecture dite « en O », connue sous l'appellation anglo-saxonne « O-Duct ».

Chaque capot mobile d'inverseur 33 comporte une paroi radialement externe 50, formant une surface aérodynamique extérieure de l'inverseur et de la nacelle, cette surface étant épousée par l'air extérieur. Chaque capot 33 comprend également une paroi radialement interne 52 participant à la délimitation de la veine secondaire 21B radialement vers l'extérieur. Cette paroi 52 se situe dans la continuité aval de la virole extérieure 40 du carter intermédiaire. Les deux parois 50, 52 définissent une cavité 54, de préférence ouverte axialement vers l'avant à l'extrémité amont du capot d'inverseur 33.

La figure 1 montre l'inverseur 30 dans une configuration de poussée vers l'avant, dit « jet direct », correspondant à une configuration standard de vol. Dans cette configuration, les capots 33 de la structure mobile 29 sont dans une position de fermeture, dite position avancée de poussée ou de « jet direct », dans laquelle ces capots d'inverseur 33 sont en appui sur la structure fixe 31, en particulier sur le bord de déviation 46B faisant partie intégrante de cette dernière. En effet, dans la configuration de poussée directe, l'extrémité amont 52a de la paroi radialement interne 52 de chaque capot 33 est en appui axial contre le bord de déviation 46B.

Le maintien du capot mobile 33 dans la position avancée de poussée directe est assuré par des moyens de verrouillage de ce capot sur la structure fixe 31 de l'inverseur. Ces moyens commandés de verrouillage (non représentés) sont conventionnels, donc ils ne seront pas davantage décrits. A titre d'exemple indicatif, il peut être mis en œuvre des verrous actifs capables de déverrouiller sous charge pour contrer l'effort de compression d'un joint entre la structure mobile et le bord de déviation. Ce type de verrou peut en effet surcomprimer le joint, pour qu'ensuite le déverrouillage puisse être commandé.

La structure mobile 29 est ainsi déplaçable en translation par rapport à la structure fixe 31 selon l'axe A1 de l'inverseur, entre la position avancée de poussée directe montrée sur la figure 1, et une position reculée d'inversion de poussée qui sera décrite ultérieurement. Dans la position avancée de poussée directe de la structure mobile 29, les grilles de déviation 32 sont agencées dans la cavité 54 des capots d'inverseur 33, en étant isolées de la veine secondaire 21B par la paroi radialement interne 52 de ces capots d'inverseur. Cette paroi 52, formant la paroi externe de la veine secondaire, est également appelée panneau interne acoustique.

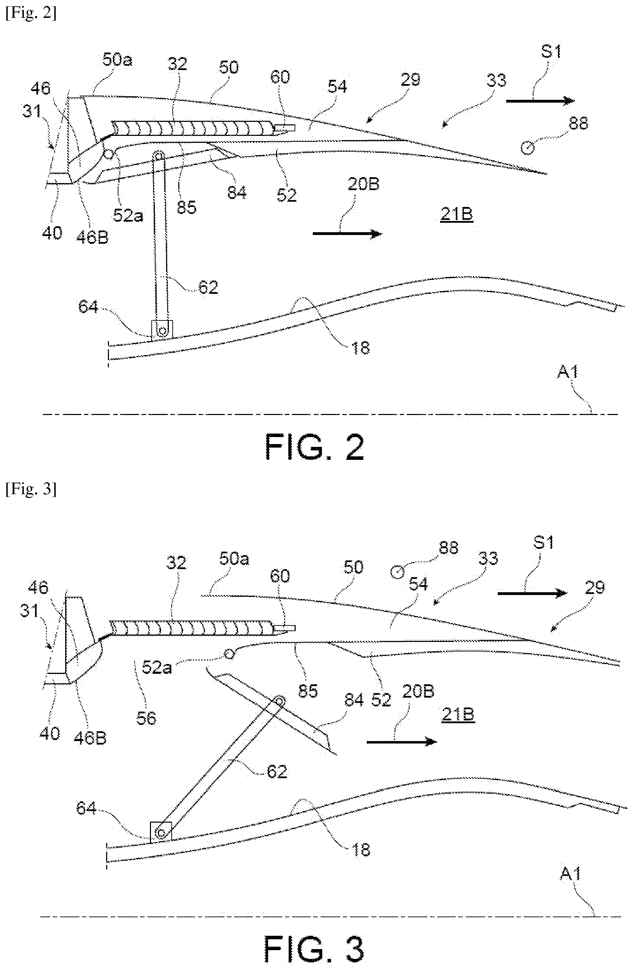

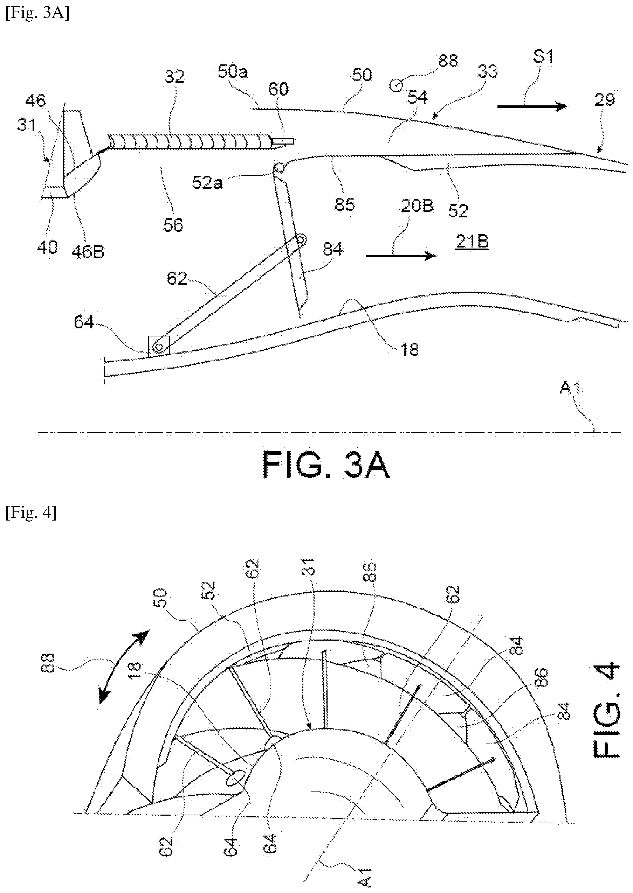

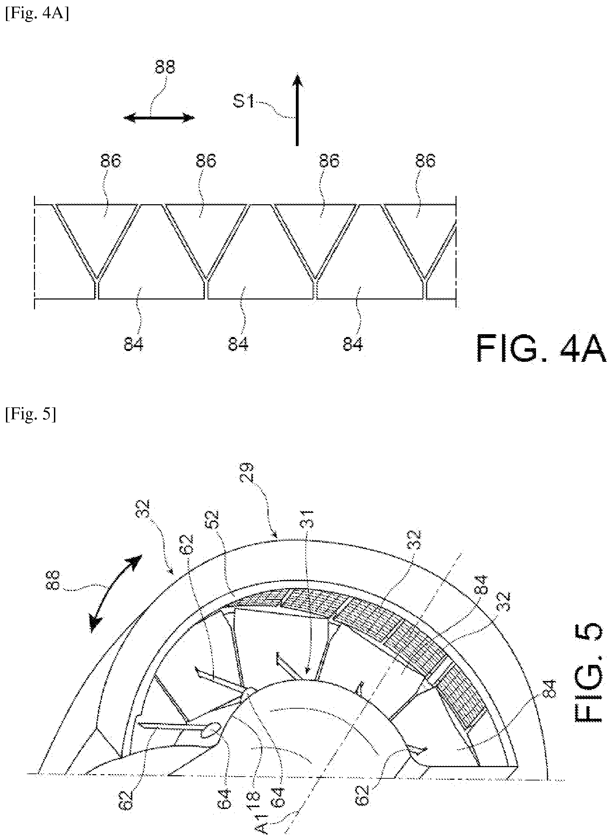

Cette configuration de poussée directe est également représentée sur les figures 2 et 4, tandis que la position reculée d'inversion de poussée de la structure mobile 29 est représentée sur les figures 3A et 5. Une position intermédiaire est représentée sur la figure 3. Sur les figure 3 et 3A, il est montré que le panneau acoustique interne reculé 52 des capots d'inverseur laisse apparaître en amont une ouverture de passage 56 de la veine secondaire 21B vers les grilles de déviation 32, reliées entre elles par un cadre arrière 60 de support annulaire ou en forme de tronçon annulaire. L'ouverture 56 est donc également délimitée vers l'amont par le bord de déviation 46B, qui s'évase radialement vers l'extérieur en allant vers l'arrière, pour canaliser un écoulement d'air destiné à traverser les grilles 32 lorsque le système mobile se trouve dans cette position reculée d'inversion de poussée. En d'autres termes, le bord de déviation 46B s'éloigne progressivement de l'axe A1 en allant de l'avant vers l'arrière, pour guider / dévier l'air vers les grilles 32 en configuration d'inversion de poussée. A l'aval, l'ouverture de passage 56 est délimitée en particulier par l'extrémité amont 52a de la paroi radialement interne 52.

Afin de dévier au moins une partie du flux secondaire 20B vers l'ouverture de passage 56 définie axialement entre le bord de déviation 46B et l'extrémité amont 52a de la paroi radialement interne 52 de chaque capot 33, l'inverseur 30 comporte des moyens d'obturation du type volets d'obturation 84. Ces derniers sont par exemple chacun articulé à son extrémité amont sur l'extrémité amont 52a de la paroi 52, et également articulé dans une zone centrale sur une bielle 62, elle-même articulée sur la paroi 18. Dans cette configuration, il s'agit de volets d'obturation 84 conventionnels, non-écopants. Néanmoins, de tels volets écopants sont envisageables, avec leur extrémité aval articulée sur la paroi 52.

Il est noté qu'une solution mixte intégrant à la fois des volets et des membranes d'obturation de la veine reste possible, sans sortir du cadre de l'invention.

Comme cela est le mieux visible sur la figure 2, lorsque la structure mobile 29 occupe sa position avancée de poussée directe, chaque volet d'obturation 84 se trouve agencé dans un renfoncement avant 85 de la paroi radialement interne 52. Ce renfoncement 85 permet de conserver une continuité aérodynamique dans la délimitation radialement externe de la veine secondaire 21B, en position de poussée directe. Au niveau de ce renfoncement 85, la paroi 52 peut être dépourvue de protection acoustique, mais celle-ci peut être reconstituée sur les éléments constitutifs des moyens d'obturation de la veine secondaire, qui seront décrits ultérieurement.

Lorsque le capot 33 se déplace vers l'arrière, la bielle 62 fait pivoter le volet d'obturation 84 autour de son extrémité avant articulée, conduisant ce volet à pénétrer dans la veine secondaire 21B, radialement vers l'intérieur. Ainsi, au moins une partie de la veine secondaire 21B se trouve obturée par les volets 84, déviant de la sorte au moins une partie du flux secondaire 20B vers l'ouverture de passage 56 en direction des grilles 32.

A cet égard, il est noté que chaque bielle 62 de commande de volet est montée sur la paroi 18, de préférence par l'intermédiaire d'une liaison pivot ou rotule 64. Cette liaison 64 peut être réalisée à l'aide d'une ferrure fixée sur la paroi fixe 18 et coopérant avec une extrémité radialement interne de bielle 62. Les bielles 62 sont espacées circonférentiellement les unes des autres au sein de la veine secondaire 21B, et leur nombre peut varier, par exemple en fonction du nombre de volets à commander.

Chaque bielle 62 est donc conçue pour se déplacer d'une position en saillie radialement dans la veine secondaire 21B, position montrée sur les figures 2 et 4 adoptée lorsque la structure mobile 29 occupe sa position avancée de poussée directe, à une position rabattue vers l'aval, montrée sur les figures 3A et 5 adoptée lorsque la structure mobile 29 occupe sa position reculée d'inversion de poussée.

De manière conventionnelle, les volets 84 se succèdent selon la direction circonférentielle 88 de l'inverseur, en rapport à l'axe A1. Chaque volet 84 peut prendre une forme générale triangulaire ou trapézoïdale, de sorte qu'en configuration d'inversion de poussée, leurs bords circonférentiels se retrouvent adjacents deux à deux, ou sensiblement adjacents, pour obturer au mieux la veine secondaire 21B. En configuration de poussée directe, les bords circonférentiels des volets 84 se trouvent donc éloignés les uns des autres, et les espaces délimités circonférentiellement entre eux sont comblés par des pièces intervolets 86, visibles sur les figures 4 et 4A. Les pièces intervolets 86 permettent ainsi de reconstituer la veine 21B entre les volets 84, pour l'obtention de meilleures performances aérodynamiques. Elles adoptent également une forme générale triangulaire ou trapézoïdale, orientées dans un sens opposé à celui des volets d'obturation 84.

Il est rappelé que dans un inverseur à grilles classique, la structure mobile coulisse dans la structure fixe par l'intermédiaire d'un système rail/ glissière qui guide la structure mobile de l'avant vers l'arrière lors de la phase d'ouverture de l'inverseur, et de l'arrière vers l'avant lors de la phase de fermeture. Un effort vers l'arrière appliqué sur la structure mobile de l'inverseur engendre donc son déplacement vers l'arrière, par rapport à la structure fixe. Cet effort est habituellement généré par les actionneurs conventionnels comme les vérins ou vis à billes.

Par contraste, l'une des particularités de l'invention réside dans le fait que l'inverseur n'est pas équipé d'actionneurs conventionnels permettant le déplacement de la structure mobile 29 vers l'arrière, de sa position avancée de poussée directe vers sa position reculée d'inversion de poussée. En d'autres termes, contrairement aux conceptions conventionnelles, il n'est pas prévu de vérin ou de vis à billes destinés à générer et contrôler l'intégralité de la course d'ouverture des capots mobiles 33 vers la position reculée d'inversion de poussée, entre leurs deux positions extrêmes. En conséquence, il n'est pas prévu non plus de moteur ou de pompe qui fourniraient l'énergie hydraulique, électrique ou pneumatique pour actionner ces vérins ou vis à billes.

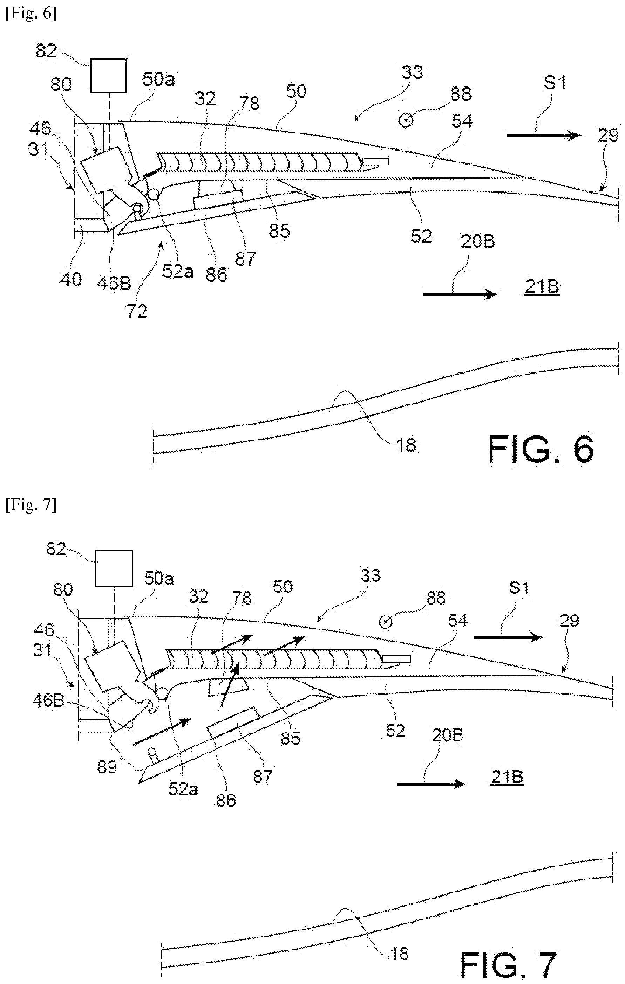

Des moyens spécifiques sont ainsi prévus pour provoquer le déplacement vers l'arrière de chaque capot mobile 33, comme cela va être décrit ci-dessous en référence aux figures 6 à 8, correspondant à d'autres vues plus détaillées de l'inverseur selon le mode de réalisation préféré précédemment décrit en référence aux figures 1 à 5.

L'inverseur comprend en effet, pour chaque capot mobile 33, un système commandé de déplacement 72 de ce capot mobile vers l'arrière, par injection d'air du flux secondaire 20B à travers la paroi radialement interne 52 du capot, dans sa cavité 54.

Pour ce faire, le système 72 est tout d'abord équipé d'au moins un passage d'air 78 à travers la paroi 52, en aval de son extrémité avant 52a. Ce passage d'air 78 peut par exemple prendre la forme d'un trou traversant ou d'une écope. De préférence, le passage d'air 78 débouche dans le renfoncement 85, en étant centré axialement au sein de celui-ci. Dans le cas d'une écope, celle-ci est de préférence de conception dynamique, par exemple de type NACA (développée par le Comité Consultatif National pour l'Aéronautique, de l'anglais « National Advisory Committee for Aeronautics »), et conçue pour écoper de l'air du flux secondaire 20B. Le passage 78 débouche également à l'intérieur de la cavité 54 du capot mobile. De préférence, ce sont plusieurs passages d'air 78 qui équipent la paroi 50 de chaque capot, par exemple jusqu'à six passages par capot 33, répartis circonférentiellement de manière régulière ou non autour de l'axe A1.

Le système comporte également une pièce d'obturation équipant le capot mobile, formé ici par l'une des pièces intervolets 86. Une telle pièce 86 est alors prévue pour chaque passage d'air 78, et elle est articulée sur la paroi 52, par son extrémité arrière. Il est noté que les autres pièces intervolets 86, qui n'entrent pas dans la constitution du système commandé 72, sont destinées à rester fixes par rapport à la paroi 52, en étant plaquées sur celle-ci radialement à l'intérieur.

Chaque pièce d'obturation 86 comporte une portion 87 d'obturation du passage d'air, de préférence pourvue d'un dispositif d'étanchéité du type joint destiné à coopérer avec tout le contour du passage d'air associé 78. Cette portion d'obturation 87 est préférentiellement centrée sur la pièce d'obturation 86, dans la direction circonférentielle et/ou dans la direction axiale.

Le système 72 comporte en outre un dispositif de commande 80, du type verrou commandé, permettant de maintenir la pièce d'obturation 86 en position d'obturation du passage d'air, montrée sur la figure 6. Dans cette position, le joint intégré à la portion d'obturation 87 permet d'éviter que de l'air du flux secondaire ne pénètre dans la cavité 54 du capot mobile. Bien évidemment, le joint d'étanchéité pourrait alternativement être prévu sur tout le contour du passage d'air 78, et être écrasé par la portion d'obturation 87 lorsque la pièce 86 occupe sa position d'obturation.

Le dispositif de commande 80 permet également de libérer cette pièce d'obturation 86 de manière à permettre l'injection d'air du flux secondaire 20B à travers le passage 78, dans ladite cavité 54, comme cela sera expliqué ci-après.

Le verrou 80 est commandé par un système de contrôle 82, par exemple le FADEC (correspondant à l'acronyme anglais de « Full Authority Digital Engine Control »). Le système de contrôle 82 est capable de délivrer un signal électrique au verrou de manière à le faire basculer d'une position fermée à une position ouverte, et inversement.

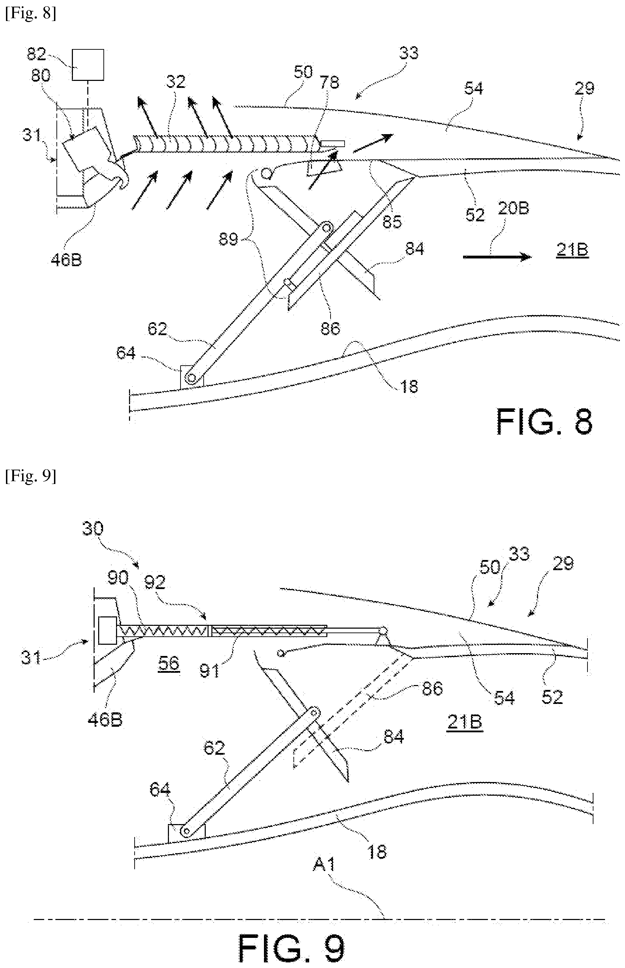

Comme indiqué précédemment, la pièce d'obturation 86 formée par la pièce intervolet est montée mobile sur la paroi 52, en étant agencée radialement vers l'intérieur par rapport à cette dernière, entre la position d'obturation du passage d'air de la figure 6 dans laquelle la pièce d'obturation est rabattue contre la paroi 52, et une position en saillie radialement vers l'intérieur dans la veine secondaire 21B montrée sur les figures 7 et 8, dans laquelle elle libère le passage d'air. Dans cette même position, la pièce d'obturation 86 forme, avec son extrémité axiale amont et conjointement avec la paroi 52, une ouverture d'introduction d'air du flux secondaire 89, ouverte axialement vers l'amont. Cette ouverture 89 s'agrandit au fur et à mesure que la pièce d'obturation 86 plonge radialement vers l'intérieur dans la veine secondaire 21B.

En vol, lorsque l'inverseur est en configuration de poussée directe, le verrou 80 est maintenu en position fermée par le système de contrôle 82. De ce fait, la pièce d'obturation 86 reste maintenue par ce verrou 80 dans sa position d'obturation, dans laquelle l'air ne peut circuler à travers le passage 78. Aucun prélèvement n'est donc réalisé sur le flux secondaire 20B par le passage / l'écope 78.

Lorsque l'inverseur doit être basculé en configuration d'inversion de poussée, il est réalisé un déplacement de la structure mobile 31 de sa position avancée de poussée directe vers sa position reculée d'inversion de poussée, et pour ce faire, il est non seulement procédé à un déverrouillage de chaque capot mobile 33 par rapport à la structure fixe 31 de l'inverseur, mais également à une étape de commande du verrou 80.

En effet, le système de contrôle 82 ouvre le verrou 80, ce qui conduit la pièce d'obturation 86 à basculer vers sa position en saillie montrée sur la figure 7, sous l'effet des efforts aérodynamiques exercés par le flux secondaire sur cette pièce 86. Des moyens élastiques peuvent éventuellement être adjoints pour forcer encore davantage le basculement de la pièce 86 dans la veine secondaire 21B, après le déverrouillage du verrou 80.

Dès le début du basculement de la pièce d'obturation 86, l'ouverture d'introduction d'air du flux secondaire 89 apparaît, libérant en même temps le passage d'air 78 à travers la paroi 52. La pièce 86 peut alors remplir une fonction d'écope, et cela permet à une partie de l'air du flux secondaire 20B de rejoindre la cavité 54, en transitant par le passage d'air libéré 78.

Cela assure ainsi une injection de cet air du flux secondaire dans la cavité 54, et du fait de la pression élevée de cet air sur les surfaces des parois 50, 52 du capot 33 à l'intérieur de la cavité 54, il se produit un déplacement de ce capot 33 vers l'arrière en direction de sa position reculée d'inversion de poussée, comme schématisé sur la figure 8.

Ainsi, le système commandé de déplacement 72 propre à l'invention permet de générer de manière simple, fiable et efficace une impulsion lors du début de la course d'ouverture du capot mobile 33. La pression de l'air sur la pièce d'obturation 86 en saillie, et de l'air traversant le passage 78 pour pénétrer dans la cavité 54, peut aussi contribuer à déplacer le capot mobile lors de la suite de cette course d'ouverture, même après une ouverture importante de la structure mobile 33 telle que représentée sur la figure 8.

La suite de cette course d'ouverture du capot mobile 33 s'effectue néanmoins de préférence sous l'effet d'autres principes, comme la trainée de l'air sur la surface aérodynamique extérieure de la paroi 50, ou la dépression observée à l'arrière du capot 33, ou encore par l'introduction d'air extérieur ou d'air du flux secondaire dans la cavité 54, par l'ouverture axiale amont entre les deux parois 50, 52.

Un actionneur de type conventionnel, mais de faible dimensionnement, pourrait néanmoins être conservé pour assurer cette fin de course d'ouverture en vol, même s'il ne s'agit pas de la solution préférée. La présence d'un tel actionneur plus faiblement dimensionné pourrait aussi être justifiée pour réaliser des opérations de test avant le vol, et/ou pour autoriser des opérations de maintenance au sol avec la structure mobile 29 en position reculée.

En outre, un actionneur peut être prévu pour assurer la course de fermeture de la structure mobile 29, correspondant à son déplacement de la position reculée d'inversion de poussée, vers la position avancée de poussée directe.

La figure 9 représente une alternative. Entre la structure fixe 31 et la structure mobile 29, il est prévu un dispositif d'amortissement 92 de fin de course d'ouverture du capot mobile 33, par exemple sous forme de vérin mécanique équipé d'un ou plusieurs ressorts d'amortissement 91. Au sein de ce dispositif 92, ou dans un dispositif séparé, il peut aussi être prévu des moyens mécaniques d'impulsion de la course d'ouverture du capot mobile 33, de préférence également sous forme de moyens élastiques comme un ou plusieurs ressorts d'impulsion 90. Le dispositif 92 peut par exemple être implanté circonférentiellement entre les grilles de déviation 32 (non représentées sur la figure 9), et ce sont un ou plusieurs de ces dispositifs 92 qui équipent chacun des deux capots mobiles 33.

Ces moyens d'amortissement peuvent être incorporés à des vérins ou vis à billes complémentaires d'ouverture ou de fermeture. De préférence, l'inverseur comporte des moyens de reprise des efforts de contre-poussée entre la structure mobile et la structure fixe générés sur les moyens d'obturation de la veine et la structure mobile. Ces moyens peuvent être communalisés avec le dispositif d'amortissement et/ou les vérins d'ouvertures et de fermetures complémentaires, ou peuvent être des moyens séparés comme des butées au niveau des rails de glissement ou des bielles télescopiques dédiées.

Diverses modifications peuvent être apportées par l'homme du métier à l'invention qui vient d'être décrite, uniquement à titre d'exemples non limitatifs, et dont la portée est définie par les revendications annexées. Par exemple, l'inverseur de poussée 30 peut alternativement présenter une architecture en « C » ou en « O ». En outre, si les modes de réalisation préférés décrits ci-dessus concernent une conception d'inverseur à grilles de déviation fixes, ces grilles peuvent alternativement être intégrées à la structure mobile de l'inverseur. Enfin, si la pièce d'obturation 86 qui a été décrite précédemment correspond préférentiellement à une pièce intervolet de l'inverseur, il pourrait alternativement s'agir d'un des volets d'obturation 84 comme décrit en figure 6 et 7, sans sortir du cadre de l'invention. L'ouverture 78 et la pièce d'obturation 86 en vis-à-vis peuvent être localisées à tout autre endroit sur la paroi 52, notamment pour des inverseurs à grilles sans volet d'obturation comme décrit dans le document US 7 484 356, ou avec des membranes d'obturation comme décrites dans le document FR 3 076 864 A1.

La pièce d'obturation peut également s'ouvrir dans une autre direction que celle présentée dans le mode de réalisation préféré décrit ci-dessus, sans sortir du cadre de l'invention. Par exemple, la pièce d'obturation pourrait pivoter radialement vers l'extérieur, ou être mobile en translation axialement ou circonférenciellement.

## Revendications

1. Inverseur de poussée (30) pour ensemble propulsif d'aéronef,
l'inverseur comprenant une structure fixe (31) équipée d'une paroi de délimitation radialement interne (18) d'une veine secondaire (21B) de l'ensemble propulsif destinée à être traversée par un flux secondaire (20B), l'inverseur comprenant également une structure mobile (29) comprenant au moins un capot mobile d'inverseur (33) présentant une cavité (54) délimitée entre une paroi radialement externe (50) et une paroi radialement interne (52) du capot mobile d'inverseur (33), la paroi radialement interne (52) formant une paroi de délimitation radialement externe de la veine secondaire (21B), la structure mobile étant déplaçable en translation par rapport à la structure fixe selon un axe central longitudinal (A1) de l'inverseur, entre une position avancée de poussée directe et une position reculée d'inversion de poussée,
**caractérisé en ce que** l'inverseur comprend également un système commandé (72) de déplacement du capot mobile (33) vers la position reculée d'inversion de poussée, par injection d'air du flux secondaire (20B) à travers la paroi radialement interne (52) du capot mobile d'inverseur, dans ladite cavité (54).

2. Inverseur de poussée selon la revendication 1, **caractérisé en ce que** le système commandé de déplacement (72) comporte :
- un passage d'air (78) à travers la paroi radialement interne (52) du capot mobile ;
- une pièce d'obturation (86) équipant le capot mobile, la pièce (86) comportant une portion d'obturation (87) du passage d'air ;
- un dispositif de commande (80) permettant de maintenir la pièce d'obturation (86) en position d'obturation du passage d'air, et de libérer cette pièce d'obturation de manière à permettre l'injection d'air du flux secondaire (20B) à travers la paroi radialement interne (52) du capot mobile d'inverseur, dans ladite cavité (54).

3. Inverseur de poussée selon la revendication 2, **caractérisé en ce que** la pièce d'obturation (86) est montée mobile sur la paroi radialement interne (52), en étant agencée radialement vers l'intérieur par rapport à cette dernière, entre la position d'obturation du passage d'air dans laquelle la pièce d'obturation (86) est rabattue contre la paroi radialement interne (52), et une position en saillie radialement vers l'intérieur dans la veine secondaire (21B), dans laquelle elle libère le passage d'air (78) et dans laquelle elle forme, préférentiellement avec son extrémité axiale amont et conjointement avec la paroi radialement interne (52), une ouverture d'introduction d'air du flux secondaire (89) ouverte axialement vers l'amont.

4. Inverseur de poussée selon la revendication 2, **caractérisé en ce que** la pièce d'obturation (86) est montée mobile sur la paroi radialement interne (52), en étant agencée radialement vers l'extérieur par rapport à cette dernière, entre la position d'obturation du passage d'air dans laquelle la pièce d'obturation (86) est rabattue contre la paroi radialement interne (52), et une position en saillie radialement vers l'extérieur, dans laquelle elle libère le passage d'air (78).

5. Inverseur de poussée selon l'une quelconque des revendications précédentes, **caractérisé en ce que** dans la position reculée d'inversion de poussée de la structure mobile (29), la structure fixe (31) de l'inverseur et une extrémité amont (52a) de la paroi radialement interne reculée (52) du capot mobile d'inverseur laissent apparaître entre elles une ouverture de passage (56) d'air à travers la veine secondaire (21B), l'inverseur de poussée comprenant également des moyens d'obturation (84) de la veine secondaire, conçus pour dévier au moins une partie du flux secondaire (20B) vers l'ouverture de passage (56), et **en ce que** la pièce d'obturation est un volet d'obturation (84) de la veine secondaire (21B), appartenant auxdits moyens d'obturation, ou **en ce que** la pièce d'obturation est une pièce intervolets (86) de reconstitution de la veine secondaire (21B), agencée circonférentiellement entre deux volets d'obturation (84) desdits moyens d'obturation.

6. Inverseur de poussée selon l'une quelconque des revendications précédentes combinée à la revendication 2, **caractérisé en ce qu'**il comprend un ou plusieurs passages d'air (78) à travers la paroi radialement interne (52), leur nombre étant compris entre un et six, répartis circonférentiellement autour de l'axe central longitudinal (A1).

7. Inverseur de poussée selon l'une quelconque des revendications précédentes, **caractérisé en ce que** la structure fixe (31) de l'inverseur comporte au moins une grille de déviation (32) agencée, en position avancée de poussée directe de la structure mobile, dans la cavité (54) du capot mobile, en étant isolée de la veine secondaire par la paroi radialement interne (52) du capot d'inverseur (33).

8. Inverseur de poussée selon l'une quelconque des revendications précédentes, **caractérisé en ce qu'**il comporte également un dispositif (92) d'amortissement de fin de course d'ouverture du capot mobile (33), dans son déplacement allant de la position avancée de poussée directe vers la position reculée d'inversion de poussée.

9. Ensemble propulsif (1) pour aéronef, comprenant une turbomachine (2) et une nacelle (3) comportant au moins un capot de soufflante (14), ainsi qu'un inverseur de poussée (30) selon l'une quelconque des revendications précédentes.

10. Procédé de commande d'un inverseur de poussée (30) selon l'une quelconque des revendications 1 à 8, **caractérisé en ce que** pour entraîner le déplacement de la structure mobile (33) de sa position avancée de poussée directe vers sa position reculée d'inversion de poussée, le procédé comprend une étape de commande du système de déplacement (72), de manière à ce que de l'air du flux secondaire (20B) soit injecté à travers la paroi radialement interne (52), dans ladite cavité (54) du capot mobile, afin de provoquer son déplacement vers la position reculée d'inversion de poussée.

## Patentansprüche

1. Schubumrichter (30) für eine Flugzeugantriebseinheit, wobei der Umrichter eine feste Struktur (31) umfasst, die mit einer radial innenliegenden Begrenzungswand (18) einer Sekundärleitung (21B) der Antriebseinheit ausgestattet ist, die von einem Sekundärstrom (20B) durchquert werden soll, wobei der Umrichter auch eine bewegliche Struktur (29) umfasst, die mindestens eine bewegliche Umrichterhaube (33) aufweist, die einen Hohlraum (54) aufweist, der zwischen einer radial außenliegenden Wand (50) und einer radial innenliegenden Wand (52) der beweglichen Umrichterhaube (33) begrenzt ist, wobei die radial innenliegende Wand (52) eine radial außenliegende Begrenzungswand der Sekundärleitung (21B) bildet, wobei die bewegliche Struktur in Translation in Bezug auf die feste Struktur entlang einer Längsmittelachse (A1) des Umrichters zwischen einer vorgeschobenen Position für den Vorwärtsschub und einer zurückgeschobenen Position für die Schubumkehr verschiebbar ist,
**dadurch gekennzeichnet, dass** der Umrichter auch ein gesteuertes Verschiebesystem (72) der beweglichen Haube (33) in die zurückgeschobene Position für die Schubumkehr durch Einblasen von Luft des Sekundärstroms (20B) durch die radial innenliegende Wand (52) der beweglichen Umrichterhaube in den Hohlraum (54) umfasst.

2. Schubumrichter nach Anspruch 1, **dadurch gekennzeichnet, dass** das gesteuerte Verschiebesystem (72) aufweist:
- einen Luftdurchlass (78) durch die radial innenliegende Wand (52) der beweglichen Haube;
- ein Verschlussteil (86), das die bewegliche Haube ausstattet, wobei das Teil (86) einen Verschlussabschnitt (87) des Luftdurchlasses aufweist;
- eine Steuervorrichtung (80), die es ermöglicht, das Verschlussteil (86) in der Verschlussposition des Luftdurchlasses zu halten und dieses Verschlussteil so freizugeben, dass Luft aus dem Sekundärstrom (20B) durch die radial innenliegende Wand (52) der beweglichen Umrichterhaube in den Hohlraum (54) eingeblasen werden kann.

3. Schubumrichter nach Anspruch 2, **dadurch gekennzeichnet, dass** das Verschlussteil (86) beweglich an der radial innenliegenden Wand (52) montiert ist, wobei es radial nach innen gegenüber dieser zwischen der Verschlussposition des Luftdurchlasses, in der das Verschlussteil (86) gegen die radial innenliegende Wand (52) geklappt ist, und einer radial nach innen in die Sekundärleitung (21B) vorstehenden Position angeordnet ist, wobei sie den Luftdurchlass (78) freigibt und wobei sie, vorzugsweise mit ihrem vorgelagerten axialen Ende und zusammen mit der radial innenliegenden Wand (52), eine axial nach oben geöffnete Lufteinlassöffnung des Sekundärstroms (89) bildet.

4. Schubumrichter nach Anspruch 2, **dadurch gekennzeichnet, dass** das Verschlussteil (86) beweglich an der radial innenliegenden Wand (52) montiert ist, wobei es radial nach außen gegenüber dieser zwischen der Verschlussposition des Luftdurchlasses, in der das Verschlussteil (86) gegen die radial innenliegende Wand (52) geklappt ist, und einer radial nach außen vorstehenden Position, in der es den Luftdurchlass (78) freigibt, angeordnet ist.

5. Schubumrichter nach einem der vorhergehenden Ansprüche, **dadurch gekennzeichnet, dass** in der zurückgeschobenen Position für die Schubumkehr der beweglichen Struktur (29) die feste Struktur (31) des Umrichters und ein vorgelagertes Ende (52a) der zurückgeschobenen, radial innenliegenden Wand (52) der beweglichen Umrichterhaube eine Durchlassöffnung (56) für Luft durch die Sekundärleitung (21B) zueinander ergeben, wobei der Schubumrichter auch Verschlussmittel (84) der Sekundärleitung umfasst, die ausgebildet sind, um mindestens einen Teil des Sekundärstroms (20B) zur Durchlassöffnung (56) umzuleiten, und wobei das Verschlussteil eine Verschlussklappe (84) der Sekundärleitung (21B) ist, die zu den Verschlussmitteln gehört, oder wobei das Verschlussteil ein Zwischenklappenteil (86) zur Wiederherstellung der Sekundärleitung (21B) ist, das umlaufend zwischen zwei Verschlussklappen (84) der Verschlussmittel angeordnet ist.

6. Schubumrichter nach einem der vorhergehenden Ansprüche in Kombination mit Anspruch 2, **dadurch gekennzeichnet, dass** er einen oder mehrere Luftdurchlässe (78) durch die radial innenliegende Wand (52) umfasst, wobei ihre Anzahl zwischen eins und sechs beträgt und sie umlaufend um die Längsmittelachse (A1) verteilt sind.

7. Schubumrichter nach einem der vorhergehenden Ansprüche, **dadurch gekennzeichnet, dass** die feste Struktur (31) des Umrichters mindestens ein Umlenkgitter (32) aufweist, das in vorgeschobener Position für den Vorwärtsschub der beweglichen Struktur in dem Hohlraum (54) der beweglichen Haube angeordnet ist, indem es von der Sekundärleitung durch die radial innenliegende Wand (52) der Umrichterhaube (33) isoliert ist.

8. Schubumrichter nach einem der vorhergehenden Ansprüche, **dadurch gekennzeichnet, dass** er auch eine Endlagendämpfungsvorrichtung (92) für die Öffnung der beweglichen Haube (33) in ihrer Verschiebung von der vorgeschobenen Position für den Vorwärtsschub in die zurückgeschobene Position für die Schubumkehr aufweist.

9. Flugzeugantriebseinheit (1), umfassend eine Turbomaschine (2) und eine Gondel (3), die mindestens eine Gebläsehaube (14) sowie einen Schubumrichter (30) nach einem der vorhergehenden Ansprüche umfasst.

10. Verfahren zur Steuerung eines Schubumrichters (30) nach einem der Ansprüche 1 bis 8, **dadurch gekennzeichnet, dass** das Verfahren einen Schritt zur Steuerung des Verschiebesystems (72) umfasst, damit Luft aus dem Sekundärstrom (20B) durch die radial innenliegende Wand (52) in den Hohlraum (54) der beweglichen Haube eingeblasen wird, um die bewegliche Struktur (33) von ihrer vorgeschobenen Position für den Vorwärtsschub in ihre zurückgeschobene Position für die Schubumkehr zu bewegen, um sie in die zurückgeschobene Position für die Schubumkehr zu bewegen.

## Claims

1. Thrust reverser (30) for an aircraft propulsion system, the reverser comprising a fixed structure (31) equipped with a radially inner delimiting wall (18) of a secondary flow path (21B) of the propulsion system intended to be traversed by a secondary flow (20B), the reverser also comprising a movable structure (29) comprising at least one movable reverser cover (33) having a cavity (54) delimited between a radially outer wall (50) and a radially inner wall (52) of the movable reverser cover (33), the radially inner wall (52) forming a radially outer delimiting wall of the secondary flow path (21B), the movable structure being movable in translation with respect to the fixed structure along a central longitudinal axis (A1) of the reverser, between an forward direct thrust position a reverse thrust position,
**characterized in that** the reverser also comprises a controlled system (72) for moving the movable cover (33) towards the reverse thrust position, by injecting air of the secondary flow (20B) through the radially inner wall (52) of the movable reverser cover, into said cavity (54).

2. Thrust reverser according to claim 1, **characterized in that** the controlled displacement system (72) comprises:
- an air passage (78) through the radially inner wall (52) of the movable cover;
- a closing part (86) fitted to the movable cover, the part (86) including a covering portion (87) of the air passage;
- a control device (80) for holding the closing part (86) in the closing position of the air passage, and releasing this closing part so as to allow the injection of air from the secondary flow (20B) through the radially inner wall (52) of the movable reverser cover, into said cavity (54).

3. Thrust reverser according to claim 2, **characterized in that** the closing part (86) is mounted movably on the radially inner wall (52), being arranged radially inwardly with respect to the latter, between the closing position of the air passageway in which the closing part (86) is folded against the radially inner wall (52), and a protruding position radially inwardly in the secondary flow path (21B), in which it releases the air passage (78) and wherein it forms, preferably with its upstream axial end and together with the radially inner wall (52), an air introduction opening of the secondary flow (89) opened axially to the upstream side.

4. Thrust reverser according to claim 2, **characterized in that** the closing part (86) is mounted movably on the radially inner wall (52), being arranged radially outwards with respect to the latter, between the closing position of the air passageway in which the closing part (86) is folded against the radially inner wall (52), and a radially outwards protruding position, in which it opens the air passageway (78).

5. Thrust reverser according to any one of the preceding claims, **characterized in that** in the retracted reverse thrust position of the movable structure (29), the fixed structure (31) of the reverser and an upstream end (52a) of the radially retracted inner wall (52) of the movable reverser cover allow a passage opening (56) for air to appear between them through the secondary flow path (21B), the thrust reverser also comprising sealing means (84) of the secondary flow path, designed to divert at least a portion of the secondary flow (20B) toward the passage opening (56), and **in that** the closing part is a closing flap (84) of the secondary flow path (21B), belonging to said closing means, or **in that** the closing part is an interflap part (86) for reconstituting the secondary flow path (21B), arranged circumferentially between two closing flaps (84) of said closing means.

6. Thrust reverser according to any one of the preceding claims combined with claim 2, **characterized in that** it comprises one or more air passages (78) through the radially inner wall (52), the number thereof being between one and six, distributed circumferentially around the central longitudinal axis (A1).

7. Thrust reverser according to any one of the preceding claims, **characterized in that** the fixed structure (31) of the reverser comprises at least one deflection grid (32) arranged, in the advanced position of direct thrust of the movable structure, in the cavity (54) of the movable cover, being isolated from the secondary flow path by the radially inner wall (52) of the reverser cover (33).

8. Thrust reverser according to any one of the preceding claims, **characterized in that** it also includes a device (92) for damping the opening travel limit of the movable cover (33), in its movement from the forward direct thrust position to the rearward reverse thrust position.

9. Aircraft propulsion system (1), comprising a turbomachine (2) and a nacelle (3) comprising at least one fan cowling (14), as well as a thrust reverser (30) according to any one of the preceding claims.

10. Method for controlling a thrust reverser (30) according to any one of claims 1 to 8, **characterized in that** to drive the moving structure (33) from its forward direct thrust position to its rearward reverse thrust position, the method comprises a step of controlling the displacement system (72), such that air from the secondary flow (20B) is injected through the radially inner wall (52), into said cavity (54) of the movable cover, in order to cause it to move to the reverse thrust position.
